# EUROPEAN PATENT APPLICATION

(11) **EP 4 738 544 A1**
(43) Date of publication of application: **06.05.2026**
(21) Application number: 24908252.0
(22) Date of filing: 11.12.2024
(51) Int. Cl.: H01M 10/6561, H01M 10/6566, H01M 10/627, H01M 50/244, H01M 50/251, B65D 88/02, B65D 90/00, B65D 88/74

(54) **CONTAINER MODULE**

(30) Priority: 22.12.2023 KR 20230190483
(71) Applicant: LG Energy Solution, Ltd., Seoul 07335 (KR)
(72) Inventor: LEE, Hyo-Jin, Daejeon 34122 (KR); LEE, Yong-Tae, Daejeon 34122 (KR); MUN, Jeong-O, Daejeon 34122 (KR); PARK, Dong-Ho, Daejeon 34122 (KR); PARK, Jeong-Seok, Daejeon 34122 (KR); YOON, Jong-Woong, Daejeon 34122 (KR); CHOI, Yeo-Joo, Daejeon 34122 (KR)
(74) Representative: Plasseraud IP
(86) International application number: PCT/KR2024/096679
(87) International publication number: WO 2025/135970

(57) **Abstract**

A container module according to an embodiment of the present disclosure may include: a case configured to provide an inner space; a first battery array positioned inside the case and including a plurality of battery packs stacked in an up-down direction; a second battery array positioned inside the case so as to be spaced apart from the first battery array in a left-right direction and including a plurality of battery packs stacked in the up-down direction; a cooling unit configured to provide cooling air into the case; and a duct positioned inside the case and configured to communicate the first battery array and the second battery array with the cooling unit.

## Description

### TECHNICAL FIELD

The present disclosure relates to a container module.

This application is based on and claims priority from Korean Patent Application No. 10-2023-0190483, filed on December 22, 2023, with the Korean Intellectual Property Office, the disclosure of which is incorporated herein in its entirety by reference.

### BACKGROUND ART

Currently commercialized secondary batteries include nickel-cadmium batteries, nickel-hydrogen batteries, nickel-zinc batteries, lithium secondary batteries, and the like. Among of them, lithium secondary batteries are in the spotlight for their advantages of free charging and discharging due to almost no memory effect, a very low self-discharge rate, and a high energy density, compared to nickel-based secondary batteries.

Recently, as issues such as power shortages and eco-friendly energy have been brought to the forefront, energy storage systems (ESSs) for storing generated power have been receiving more attention. For example, a smart grid system has been proposed as one of the methods for controlling power supply and demand. The amount of power used by consumers may fluctuate frequently. Typically, power usage sharply increases in the afternoon during the summer due to the use of air conditioners, and then sharply decreases at night. Although power consumption may fluctuate frequently in terms of consuming power, it is realistically difficult to match the supply of power to such power consumption even if the amount of power generated is controlled to some extent. Therefore, the imbalance of power supply and consumption may cause oversupply or shortage of power, and the smart grid system may flexibly store and control power to solve this problem. The smart grid system is intended to store power when there is surplus power or in areas with excess power, and supply the stored power when there is a power shortage or to areas with insufficient power. One of the key components for building this smart grid system is an energy storage system for storing power. In addition, as electric vehicles have been commercialized recently, energy storage systems may be utilized in facilities for charging electric vehicles, such as charging stations.

Such energy storage systems may include a plurality of battery containers. The number and arrangement of battery containers may vary depending on various environments and requirements. In order to respond to these requirements, there is an increasing need to configure battery containers as a combination of small modules so as to improve energy density and to be expandable in various forms.

### DISCLOSURE

### Technical Problem

The present disclosure is designed to solve the problems and other problems.

The present disclosure is to provide a container module with improved cooling performance.

The present disclosure is also to provide a container module with reduced cooling differences depending on the positions inside the container.

The present disclosure is also to provide a container module with improved assembly.

The present disclosure is also to provide a container module with a simplified structure.

The present disclosure is also to provide a miniaturized container module.

### Technical Solution

In one aspect of the present disclosure, there is provided a container module including: a case configured to provide an inner space; a first battery array positioned inside the case and including a plurality of battery packs stacked in an up-down direction; a second battery array positioned inside the case so as to be spaced apart from the first battery array in a left-right direction and including a plurality of battery packs stacked in the up-down direction; a cooling unit configured to provide cooling air into the case; and a duct positioned inside the case and configured to communicate the first battery array and the second battery array with the cooling unit.

In addition, the case may include a front panel facing the first battery array and the second battery array, and the cooling unit may be installed on the front panel.

In addition, the duct may include an outlet positioned higher than at least one of the first battery array and the second battery array.

In addition, the duct may include: a front part communicating with the cooling unit and configured to guide the cooling air upward; and a rear part extending from the front part in a front-back direction and configured to guide the cooling air in the front-back direction.

In addition, the duct may include an outlet extending between the first battery array and the second battery array.

In addition, the container module may further include a flow guide positioned inside the duct and configured to distribute the cooling air in the front-back direction.

In addition, the flow guide may include: a first part positioned inside the duct; and a second part connected to the first part and extending outside the duct.

In addition, the second part may be positioned between the first battery array and the second battery array and may extend downward.

In addition, the case may include a side panel, and the container module may further include a side cover positioned between the side panel and the second battery array, and configured to cover one side of the second battery array.

In addition, the case may include a rear panel, and the container module may further include a rear cover positioned between the rear panel and the second battery array, and configured to cover the rear of the second battery array.

In addition, the rear cover may extend to cover between the first battery array and the second battery array and to cover the rear of the first battery array.

In addition, the container module may further include an inner cover positioned between the first battery array and the second battery array, configured to cover an inner side of the second battery array, and having a supply hole.

In another aspect of the present disclosure, there is provided a container system including a container module of the present disclosure.

In another aspect of the present disclosure, there is provided an energy storage system including a container module of the present disclosure.

### Advantageous Effects

According to at least one of the embodiments of the present disclosure, the cooling performance of the container module can be improved.

According to at least one of the embodiments of the present disclosure, cooling differences depending on the positions inside the container can be reduced.

According to at least one of the embodiments of the present disclosure, the energy density of the container module can be improved.

According to at least one of the embodiments of the present disclosure, the structure of the container module can be simplified.

According to at least one of the embodiments of the present disclosure, the container module can be miniaturized.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating a container module according to an embodiment of the present disclosure.
FIG. 2 is a drawing illustrating a plurality of columns in FIG. 1.
FIG. 3 is a drawing illustrating a cover further coupled to the configuration of FIG. 2.
FIG. 4 is a drawing illustrating a bracket further provided to the configuration of FIG. 3.
FIG. 5 and FIG. 6 are drawings illustrating the bracket in FIG. 3.
FIG. 7 is a cross-sectional view illustrates the configuration take along line N - N' in FIG. 4.
FIG. 8 is a drawing illustrating a battery pack further provided to the configuration of FIG. 4.
FIG. 9 is a cross-sectional view illustrating the configuration taken along line J - J' in FIG. 8.
FIG. 10 is a drawing illustrating a cooling unit and a duct further provided to the configuration of FIG. 8.
FIG. 11 is a cross-sectional view illustrating the configuration taken along line A - A' in FIG. 1.
FIG. 12 is an enlarged view of part B in FIG. 11.
FIG. 13 is an enlarged view of part C in FIG. 11.
FIG. 14 is an enlarged view of part D in FIG. 11.
FIG. 15 is an enlarged view of part E in FIG. 11.
FIG. 16 is an enlarged view of part F in FIG. 11.
FIG. 17 is an enlarged view of part G in FIG. 11.
FIG. 18 is a cross-sectional view illustrating the configuration taken along line H - H' in FIG. 1.
FIG. 19 is an enlarged view of FIG. 18.
FIG. 20 is a cross-sectional view illustrating the configuration taken along line H - H' in FIG. 1 when viewed from a different direction.
FIG. 21 is a cross-sectional view illustrating the configuration taken along line I - I' in FIG. 18.
FIG. 22 is a partially cross-sectional view schematically illustrating the configuration taken along line H - H' in FIG. 1.
FIG. 23 is an enlarged view of part J in FIG. 22.
FIG. 24 is an enlarged view of part K in FIG. 22.
FIG. 25 is an enlarged view of part M in FIG. 22.
FIG. 26 is a drawing illustrating a container according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

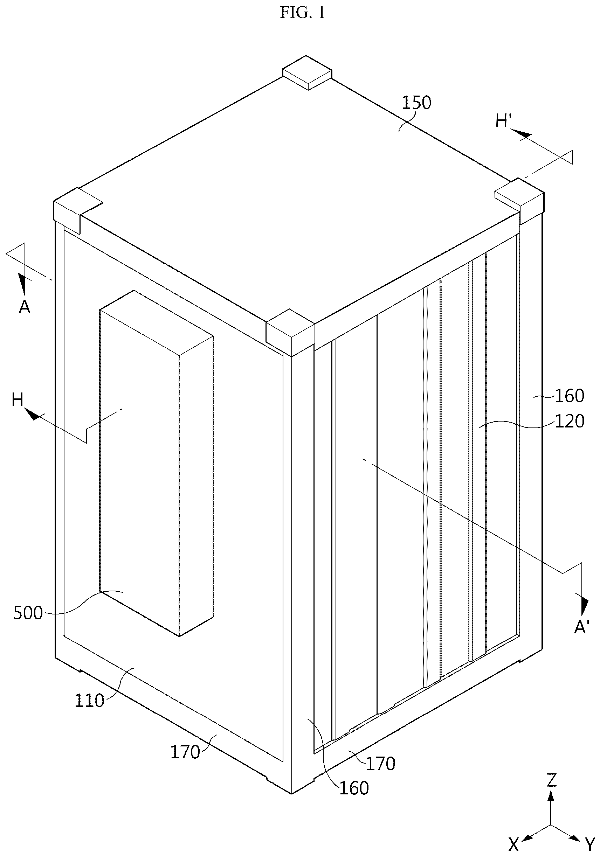

FIG. 1 is a drawing illustrating a container module according to an embodiment of the present disclosure. Referring to FIG. 1, the case 100 may provide a space inside. The case 100 may form the exterior of the container module. The case 100 may have a cuboid shape. The case 100 may include a front panel 110, a rear panel 130, a top panel 150, a bottom panel 140, and a side panel 120. A pair of side panels 120 may be provided.

The front panel 110 may be provided with a cooling unit 500. For example, the cooling unit 500 may be a heat exchanger such as an HVAC, a chiller, a cooler, or the like. The cooling unit 500 may control the temperature of a cooling fluid flowing inside the case 100. For example, the cooling unit 500 may supply or circulate cooling air inside the case 100.

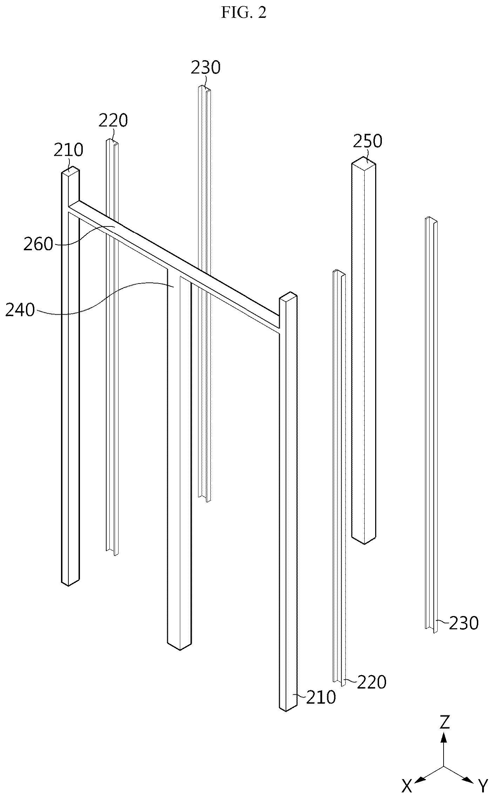

FIG. 2 is a drawing illustrating a plurality of columns in FIG. 1. Referring to FIG. 2, the container module may include a front side column 210, a middle side column 220, and a rear side column 230. The front side column 210, the middle side column 220, and the rear side column 230 may be sequentially disposed in the front-back direction or the X-axis direction. The front side column 210, the middle side column 220, and the rear side column 230 may each be provided as a pair.

In addition, the container module may include a front center column 240 and a rear front column. The front center column 240 and the rear front column may be sequentially positioned in the front-back direction or the X-axis direction.

In addition, the container module may include a reinforcing beam 260. The reinforcing beam 260 may extend in the left-right direction or the Y-axis direction. The reinforcing beam 260 may connect a pair of front side columns 210.

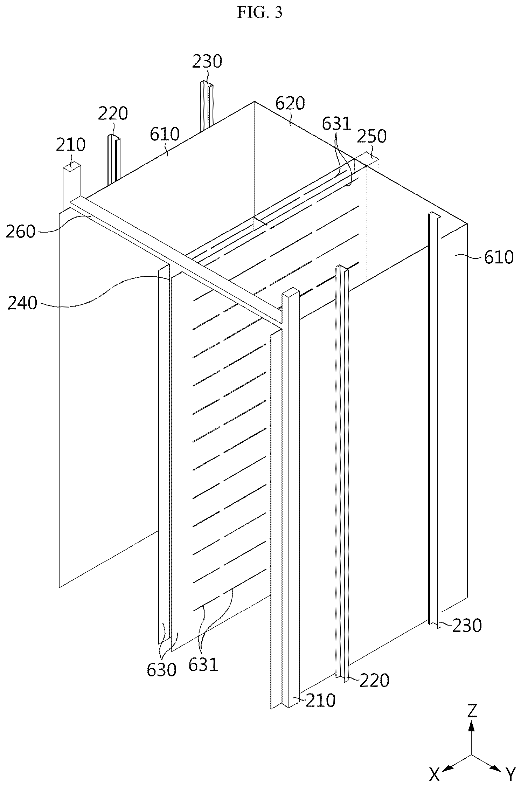

FIG. 3 is a drawing illustrating a cover further provided to the configuration of FIG. 2. Referring to FIG. 3, the container module may include an inner cover 630, a side cover 610, and a rear cover 620. A plurality of side covers 610 may be provided. The side cover 610 may be coupled to or in contact with at least one of the front side column 210, the middle side column 220, and the rear side column 230.

The rear cover 620 may be coupled to or in contact with the rear center column 250. The rear cover 620 may connect or couple a pair of side covers 610 to each other. The pair of side covers 610 and the rear cover 620 may form a space inside them.

The inner cover 630 may be coupled to or in contact with at least one of the front center column 240 and the rear center column 250. The inner cover 630 may partition the space formed by the pair of side covers 610 and the rear cover 620.

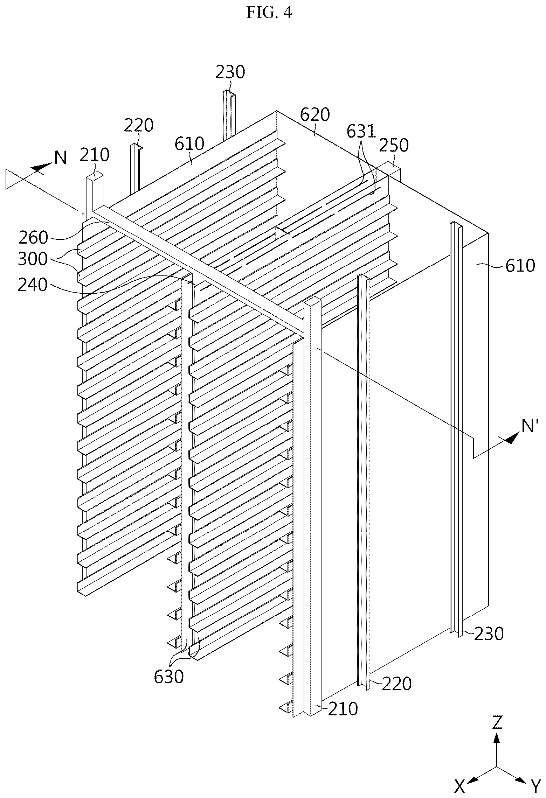

FIG. 4 is a drawing illustrating a bracket 300 further provided to the configuration of FIG. 3. Referring to FIG. 4, the bracket 300 may extend in the front-back direction or the X-axis direction. A plurality of brackets 300 may be provided. The plurality of brackets 300 may be arranged in the up-down direction or the Z-axis direction. In addition, the plurality of brackets 300 may be arranged in the left-right direction or the Y-axis direction.

The bracket 300 may be coupled to or in contact with at least one of the side cover 610, the front side column 210, the middle side column 220, and the rear side column 230.

In addition, the bracket 300 may be coupled to or in contact with at least one of the inner cover 630, the front center column 240, and the rear center column 250.

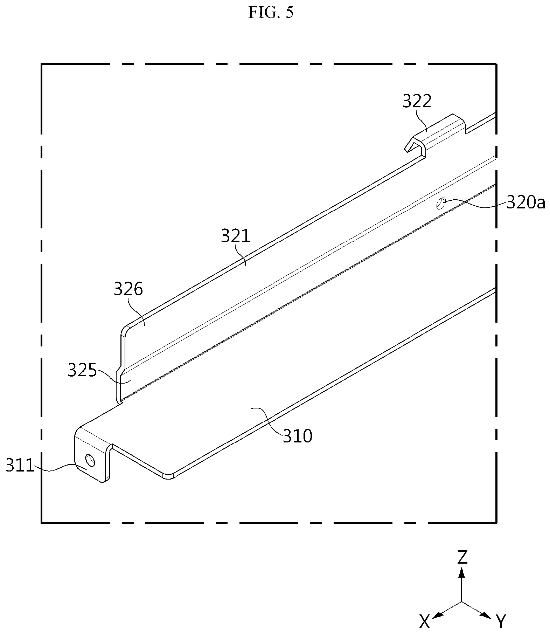

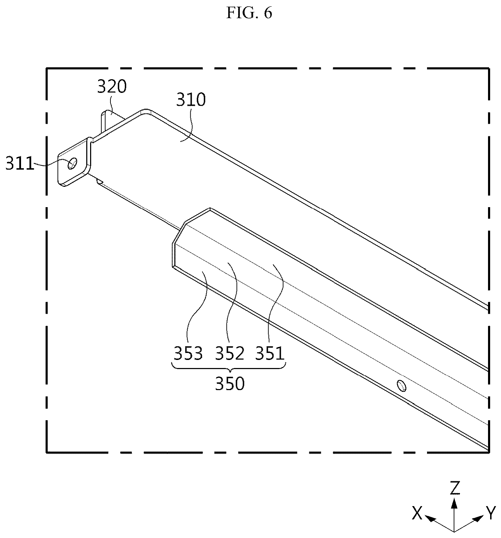

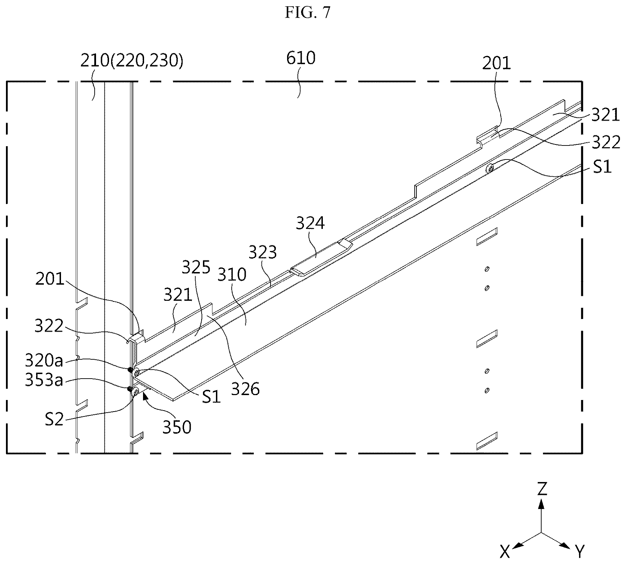

FIG. 5 and FIG. 6 are drawings illustrating the bracket 300 in FIG. 3. FIG. 7 is a cross-sectional view illustrates the configuration take along line N - N' in FIG. 4. Referring to FIGS. 5 to 7, the bracket 300 of a container module according to an embodiment of the present disclosure may include a horizontal portion 310, a vertical portion 320, and a support 350.

The horizontal portion 310 may extend in the front-back direction or the Y-axis direction. The horizontal portion 310 and a stopper 312 may be formed integrally with each other. The horizontal portion 310 may include a first fixing portion 311 at the front. The first fixing portion 311 may be formed by bending a portion of the horizontal portion 310 downward. The first fixing portion 311 and the stopper 312 may be formed integrally with each other. The first fixing portion 311 may include a through-hole formed in the front-back direction.

The vertical portion 320 may extend in the front-back direction or the Y-axis direction. The vertical portion 320 may extend upward from the horizontal portion 310. The vertical portion 320 may be formed by bending a portion of the horizontal portion 310 upward. The vertical portion 320 and the horizontal portion 310 may be formed at an angle of approximately 90 degrees. The vertical portion 320 and the horizontal portion 310 may be formed integrally with each other. In addition, the vertical portion 320 may extend upward to have a step formed.

The vertical portion 320 may include a first part 325 and a second part 326. The first part 325 may extend from the horizontal portion 310. The second part 326 may extend from the first part 325. The first part 325 and the second part 326 may be formed long along the front-back direction or the Y-axis direction, respectively. The first part 325 and the second part 326 may be formed to have a step therebetween. The second part 326 may be formed to be stepped inward or in the direction in which the horizontal portion 310 is formed from the first part 325. The second part 326 may be formed by bending a portion of the first part 325 upward. The first part 325 and the second part 326 may be formed integrally.

The second part 326 may include an unevenness region. The second part 326 may include a concave portion 323 and a convex portion 321. The second part 326 may include a plurality of concave portions 323 and convex portions 321. The concave portions 323 and the convex portions 321 may be alternately arranged along the front-back direction or the Y-axis direction. The convex portion 321 may include a hook 322. The hook 322 may be formed toward the outside of the second part 326. The hook 322 may be provided in each convex portion 321. The first part 325 may include a plurality of first fastening holes 320a. The first fastening holes 320a may be located below the hooks 322. One first fastening hole 320a may be provided in each hook 322. The concave portion 323 may include a second fixing portion 324. The second fixing portion 324 may be formed toward the inside of the second part 326. The second fixing portion 324 may be provided in each concave portion 323. The second fixing portion 324 may be formed by a part of the concave portion 323 bent or curved inward. The second fixing portion 324 and the concave portion 323 may be formed at an angle of approximately 90 degrees. The second fixing portion 324 and the concave portion 323 may be formed integrally with each other.

The support 350 may include a horizontal support 351. The horizontal support 351 may extend in the front-back direction or the Y-axis direction. The horizontal support 351 may be coupled, fixed, or attached to a lower surface of the horizontal portion 310. For example, the horizontal support 351 may be coupled to the lower surface of the horizontal portion 310 by welding. The length of the horizontal support 351 in the front-back direction may be configured to be shorter than the length of the horizontal portion 310 in the front-back direction. In addition, the width of the horizontal support 351 in the left-right direction or the length thereof in the Y-axis direction may be configured to be shorter than the width of the horizontal portion 310 in the left-right direction or the length thereof in the Y-axis direction. For example, the width of the horizontal support 351 in the left-right direction may be formed to be less than half of the width of the horizontal portion 310 in the left-right direction.

The support 350 may include a vertical support 353. The vertical support 353 may extend in the front-back direction or the Y-axis direction. The vertical support 353 and the horizontal support 351 may be formed at an angle of approximately 90 degrees. The horizontal support 351 and the vertical support 353 may be formed integrally. The vertical support 353 may include a plurality of second fastening holes 353a. The second fastening hole 353a may be located below the hook 322. One second fastening hole 353a may be provided to correspond to each hook 322. The vertical support 353 may be formed by a portion of the horizontal support 351 bent downward. The horizontal support 351 and the vertical support 353 may be formed integrally.

A connection portion 352 may connect the horizontal support 351 and the vertical support 353. The connection portion 352 may extend in the front-back direction or the Y-axis direction. The connection portion 352 may be formed to be inclined. The connection portion 352 may be referred to as a truss part 352. The connection portion 352 may be formed by a portion of the horizontal support 351 obliquely bent or curved downward. Alternatively, the connection portion 352 may be formed by a portion of the vertical support 353 obliquely bent or curved inward. The horizontal support 351, the connection portion 352, and the vertical support 353 may be formed integrally.

The column 200 may have a hooking hole 201. In addition, the side cover 610 may have a hooking hole 611. The hook 322 of the bracket 300 may be caught in the hooking hole 201 or 611. In addition, a first fastening member S1 may fasten, couple, or fix the first part 325 to the column 200 and the side cover 610 through the first fastening hole 320a of the first part 325. In addition, a second fastening member S2 may fasten, couple, or fix the vertical support 353 to the column 200 and the side cover 610 through the second fastening hole 353a of the vertical support 353.

Since the second part 326 is formed with an inward step relative to the first part 325, the hook 322 of the bracket 300 may be caught on the column 200 and the side cover 610 to bring the first part 325 into close contact with the side cover 610. As the hook 322 is caught on the column 200 and the side cover 610, the approximate position of the bracket 300 may be aligned, and the bracket 300 may be fixed using the fastening members S1 and S2. The step of the second part 326 and the hook 322 may improve the convenience of assembling the bracket 300. The vertical portion 320 and the horizontal support 351 may be positioned substantially on the same plane.

The brackets 300 may be paired and coupled to the column 200 and the side cover 610. A pair of brackets 300 may be disposed in the left-right direction or the Y-axis direction. The pair of brackets 300 may be positioned at substantially the same height.

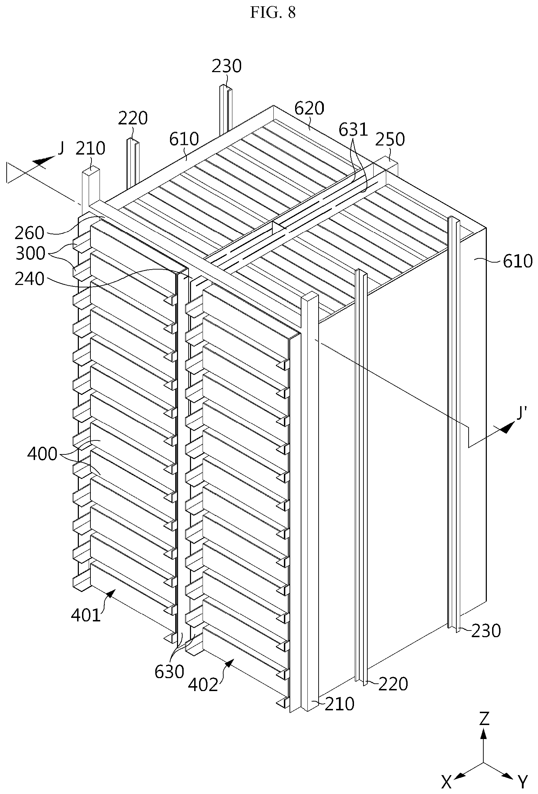

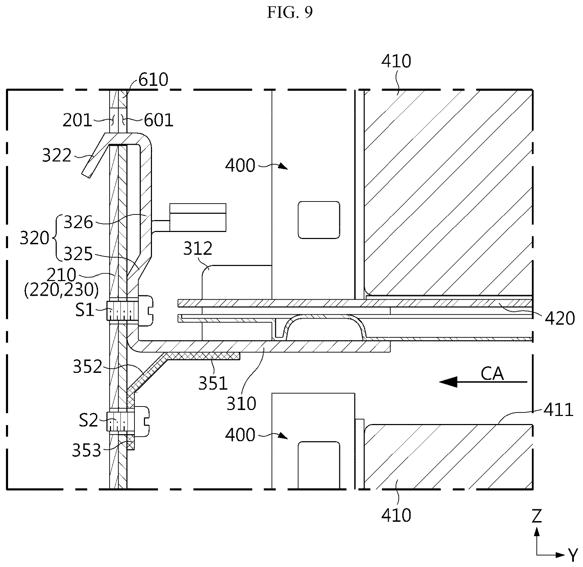

FIG. 8 is a drawing illustrating a battery pack 400 further provided to the configuration of FIG. 4. FIG. 9 is a cross-sectional view illustrating the configuration taken along line J - J' in FIG. 8. Referring to FIGS. 8 and 9, the container module may include a plurality of battery packs 400. The battery pack 400 may be positioned, installed, fastened, connected, or fixed to the upper surface of the bracket 300. The battery pack 400 may include a plurality of battery cells 410. In this case, the battery cells 410 may indicate secondary batteries. A plurality of battery packs 400 may be provided. The battery pack 400 may have a cuboid shape.

In addition, the battery pack 400 may include a base plate 420 and a plurality of battery cells 410. The plurality of battery cells 410 may be positioned, installed, fixed, or coupled to the upper surface of the base plate 420. The plurality of battery cells 410 may be positioned such that their upper surfaces are exposed. Therefore, the plurality of battery cells 410 may be directly exposed to the cooling air CA, thereby increasing the cooling efficiency of the battery pack 400.

A pair of brackets 300 may be fastened and coupled to one battery pack 400. Alternatively, a pair of brackets 300 may receive one battery pack 400 mounted thereon. The horizontal portion 310 of the left bracket 300 of the pair of brackets 300 may extend to the right or in the +Y-axis direction. In addition, the horizontal portion 310 of the right bracket 300 of the pair of brackets 300 may extend to the left or in the -Y-axis direction. The battery pack 400 may be installed by placing the battery pack 400 on the horizontal portion 310 of the pair of brackets 300 and then pushing it backward.

A first battery array 401 may be located inside the case 100, and may include a plurality of battery packs 400 that are stacked in the up-down direction or the Z-axis direction.

A second battery array 402 may be located inside the case 100, and may include a plurality of battery packs 400 that are stacked in the up-down direction or the Z-axis direction. The second battery array 402 may be spaced apart from the first battery array 401 in the left-right direction. The second battery array 402 may be located on the right side of the first battery array 401.

The first battery array 401 and the second battery array 402 may be collectively referred to as battery arrays 401 and 402.

The battery pack 400 may have a large weight. Accordingly, the weight applied to the bracket 300 may also be high. The bracket 300 may have the support 350 so as to maintain rigidity even under a high load, thereby stably supporting the battery pack 400.

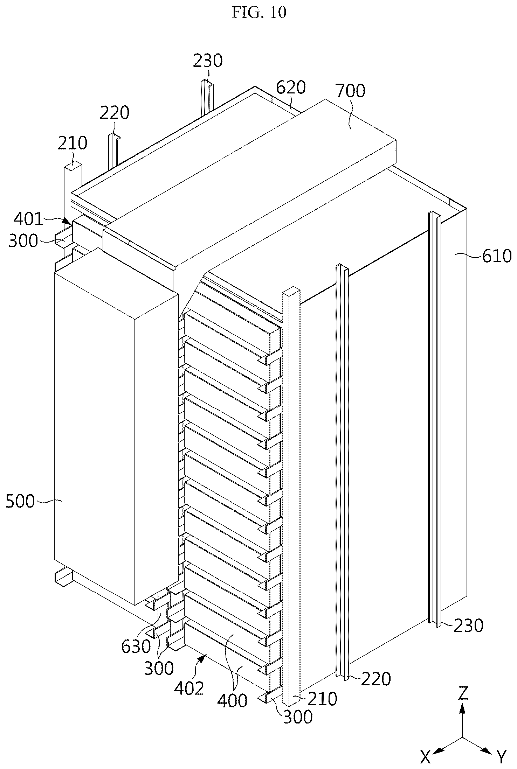

FIG. 10 is a drawing illustrating a cooling unit 500 and a duct 700 further provided to the configuration of FIG. 8. Referring to FIGS. 1, 8, and 10, the container module according to an embodiment of the present disclosure may include a case 100, a first battery array 401, a second battery array 402, a cooling unit 500, and a duct 700.

The cooling unit 500 may provide cooling air CA into the case 100. The duct 700 may be located inside the case 100. The duct 700 may extend in the front-back direction or the X-axis direction. The duct 700 may provide a flow path therein. The duct 700 may communicate with the cooling unit 500. In addition, the duct 700 may communicate with the first battery array 401 and the second battery array 402. The duct 700 may connect the first battery array 401 and the second battery array 402 with the cooling unit 500.

According to this configuration of the present disclosure, the cooling performance of the container module may be improved. The cooling air CA provided from the cooling unit 500 may be supplied to the first battery array 401 and the second battery array 402 along the duct 700. The cooling air CA may exchange heat with the plurality of battery cells 410 and then be recovered to the cooling unit 500. The cooling air CA may be circulated in the closed system.

Referring to FIG. 1, FIG. 8, and FIG. 10, a front panel 110 of the container module according to an embodiment of the present disclosure may face the first battery array 401 and the second battery array 402. In addition, the cooling unit 500 may be installed on the front panel 110.

According to this configuration of the present disclosure, the cooling performance of the container module may be improved. The first battery array 401 and the second battery array 402 may be disposed symmetrically, and the cooling unit 500 may supply cooling air CA between the first battery array 401 and the second battery array 402, so that the first battery array 401 and the second battery array 402 may be evenly cooled.

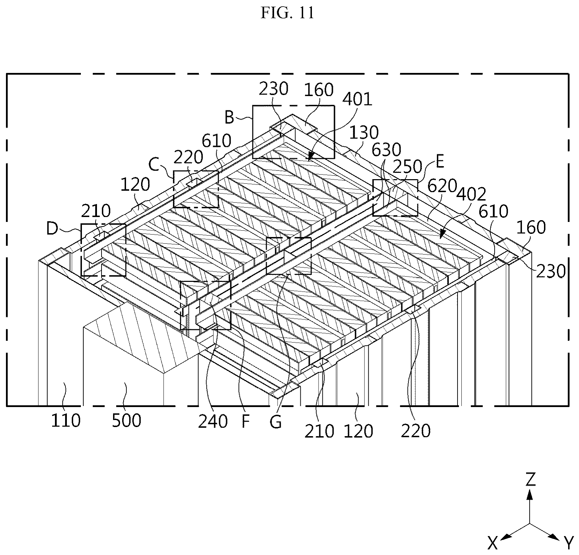

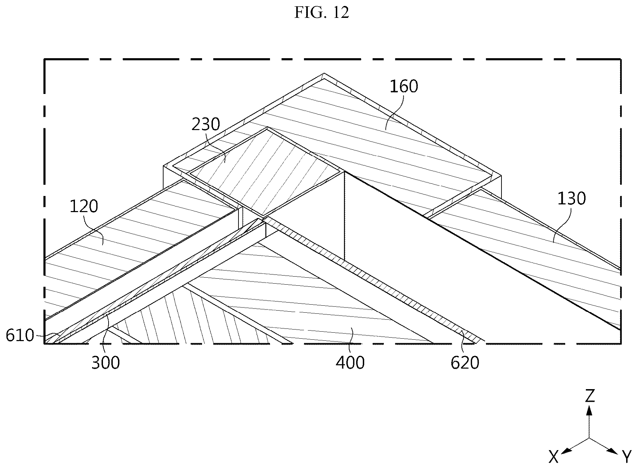

FIG. 11 is a cross-sectional view illustrating the configuration taken along line A - A' in FIG. 1. FIG. 12 is an enlarged view of part B in FIG. 11. Referring to FIGS. 11 and 12, four corner columns 160 may be provided. The corner column 160 may extend in the up-down direction or the Z-axis direction. The corner column 160 may be located at the corner where the side panel 120 and the rear panel 130 meet. In addition, the corner column 160 may be located at the corner where the side panel 120 and the front panel 110 meet. The corner column 160 may form the exterior of the container module.

A pair of rear side columns 230 may be provided. The rear side column 230 may be located inside the case 100. The rear side column 230 may extend in the up-down direction or the Z-axis direction. The rear side column 230 may support the corner column 160. In addition, the rear side column 230 may be in contact with the corner column 160. In addition, the rear side column 230 may be coupled, fastened, fixed, or attached to the corner column 160. For example, the rear side column 230 may be welded to the inner surface of the corner column 160.

The side cover 610 may have a rectangular shape. In addition, the side cover 610 may have a plate shape. In addition, the side cover 610 may include a metal material. The rear end or rear side of the side cover 610 may be in contact with or coupled to the rear side column 230.

In addition, the rear cover 620 may have a rectangular shape. In addition, the rear cover 620 may have a plate shape. In addition, the rear cover 620 may include a metal material. The left end or left side of the rear cover 620 may be in contact with or coupled to at least one of the rear side column 230 and the side cover 610.

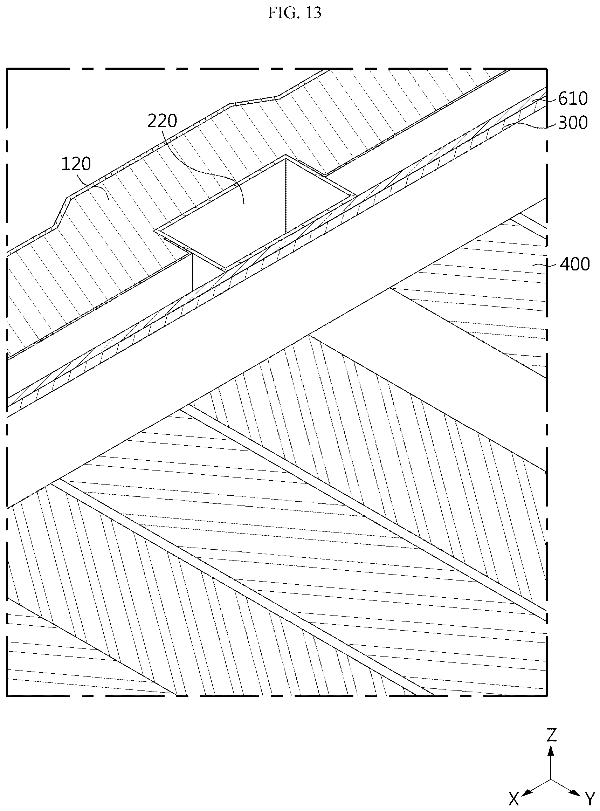

FIG. 13 is an enlarged view of part C in FIG. 11. Referring to FIG. 13, the side cover 610 may be in contact with or coupled to the middle side column 220. Alternatively, the middle side column 220 may be positioned between the side cover 610 and the side panel 120.

The side panel 120 may include a groove formed on the inner surface. The groove may extend in the up-down direction or the Z-axis direction. In addition, the middle side column 220 may be received or positioned inside the groove.

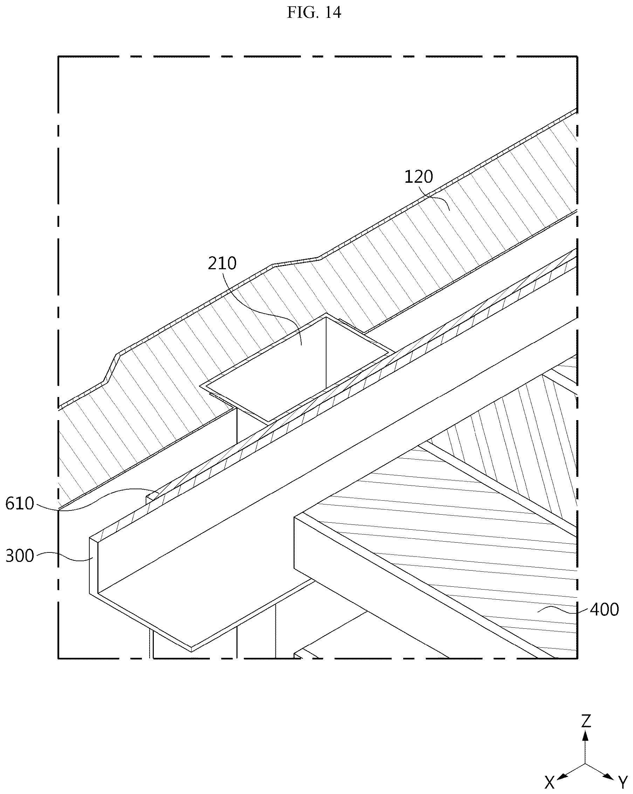

FIG. 14 is an enlarged view of part D in FIG. 11. Referring to FIG. 14, the side cover 610 may be in contact with or coupled to the front side column 210. Alternatively, the front side column 210 may be positioned between the side cover 610 and the side panel 120.

The side panel 120 may include a groove formed on the inner surface. The groove may extend in the up-down direction or the Z-axis direction. In addition, the front side column 210 may be received or positioned inside the groove.

Referring to FIGS. 11 to 14, the side cover 610 of the container module according to an embodiment of the present disclosure may be positioned between the side panel 120 and the first battery array 401 so as to cover the left side of the first battery array 401. In addition, the side cover 610 may be positioned between the side panel 120 and the second battery array 402 so as to cover the right side of the second battery array 402.

According to this configuration of the present disclosure, the cooling efficiency of the container module may be improved. The side cover 610 may block the cooling air CA from exchanging heat with the side panel 120. In addition, the side cover 610 may guide the cooling air CA introduced into the first battery array 401 or the second battery array 402 to flow forward while exchanging heat with the battery cell 410.

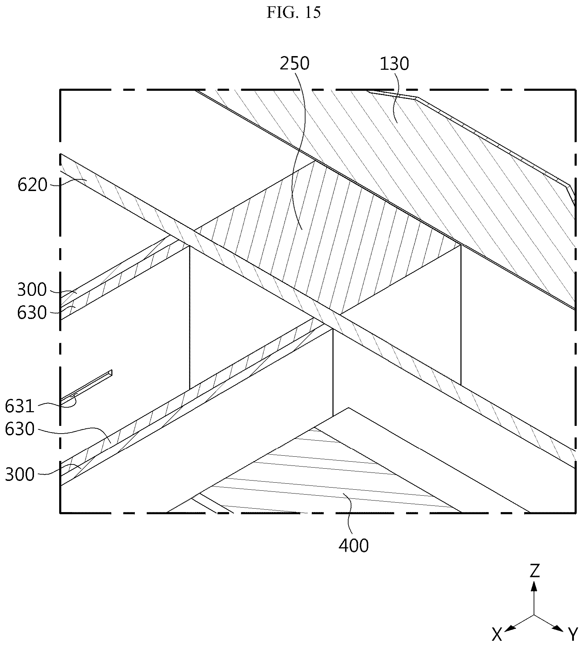

FIG. 15 is an enlarged view of part E in FIG. 11. Referring to FIG. 15, the rear cover 620 of the container module according to an embodiment of the present disclosure may be in contact with or coupled to the rear center column 250. Alternatively, the rear center column 250 may be located between the rear cover 620 and the rear panel 130. The rear center column 250 may be in contact with, fixed to, or coupled to the rear panel 130. The rear cover 620 may cover the rear of the second battery array 402. In addition, the rear cover 620 may cover the rear of the first battery array 401.

According to this configuration of the present disclosure, the cooling efficiency of the container module may be improved. The rear cover 620 may block the cooling air CA from exchanging heat with the rear panel 130. In addition, the rear cover 620 may guide the cooling air CA introduced into the first battery array 401 or the second battery array 402 to flow forward after exchanging heat with the battery cell 410.

Referring to FIG. 15, the rear cover 620 of the container module according to an embodiment of the present disclosure may cover between the first battery array 401 and the second battery array 402. In addition, the rear cover 620 may cover the rear of the first battery array 401.

According to this configuration of the present disclosure, the cooling efficiency of the container module may be improved. The rear cover 620 may block the cooling air CA from exchanging heat with the rear panel 130. In addition, the rear cover 620 may guide the cooling air CA introduced between the first battery array 401 or the second battery array 402 to be supplied to the first battery array 401 and the second battery array 402.

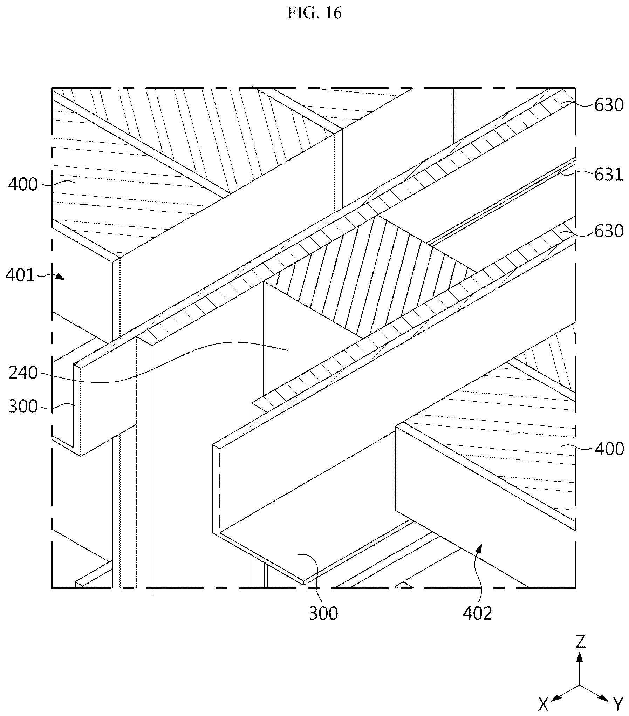

FIG. 16 is an enlarged view of part F in FIG. 11. Referring to FIGS. 15 and 16, the inner cover 630 of the container module according to an embodiment of the present disclosure may be positioned between the first battery array 401 and the second battery array 402. A plurality of inner covers 630 may be provided.

The inner cover 630 may have a rectangular shape. In addition, the inner cover 630 may be plate-shaped. In addition, the inner cover 630 may include a metal material. The inner cover 630 may be in contact with or coupled to at least one of the front center column 240 or the rear center column 250. In addition, the front center column 240 may be located between a pair of inner covers 630. In addition, the rear center column 250 may be located between a pair of inner covers 630.

In addition, the inner cover 630 may be provided with a supply hole 631. A plurality of supply holes 631 may be formed.

According to this configuration of the present disclosure, the cooling efficiency of the container module may be improved. The cooling air CA introduced between the first battery array 401 or the second battery array 402 may be supplied to the first battery array 401 and the second battery array 402 through the supply hole 631 of the inner cover 630. The inner cover 630 may guide the flow of cooling air CA.

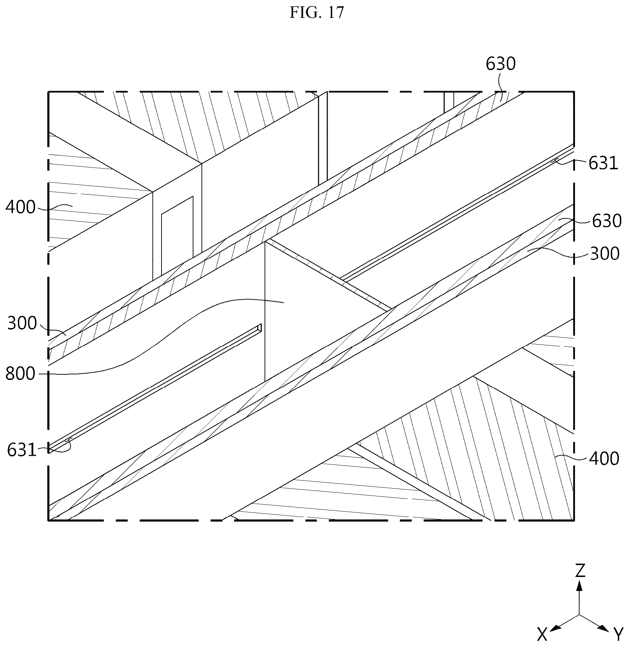

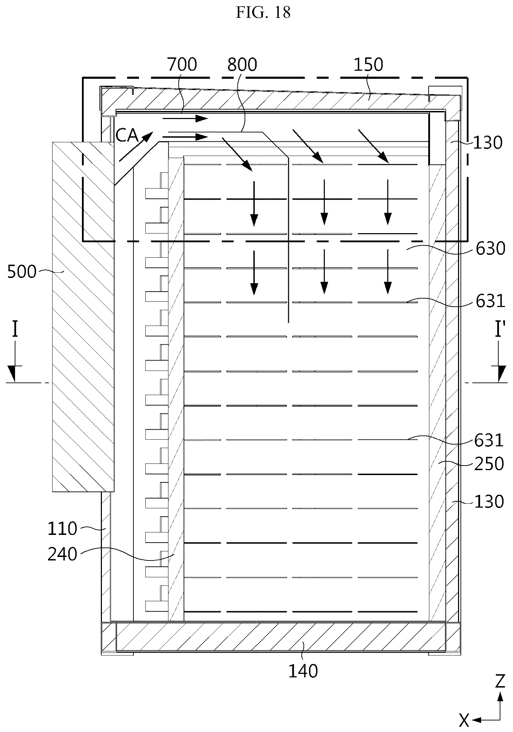

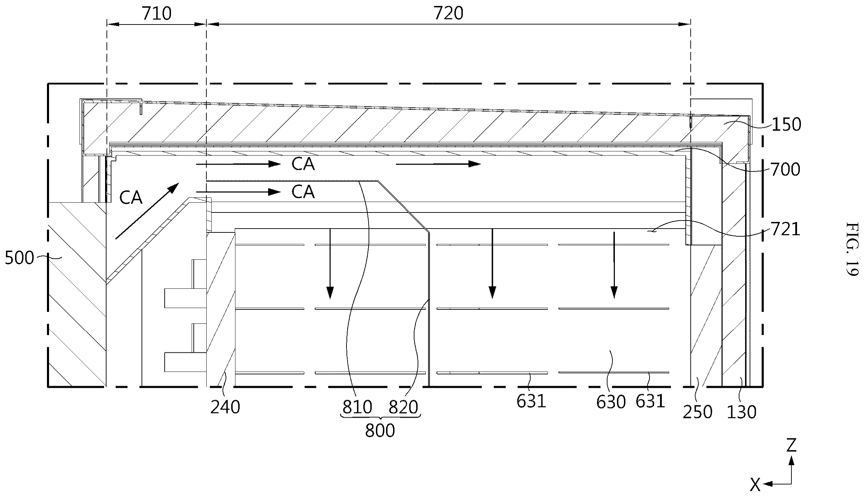

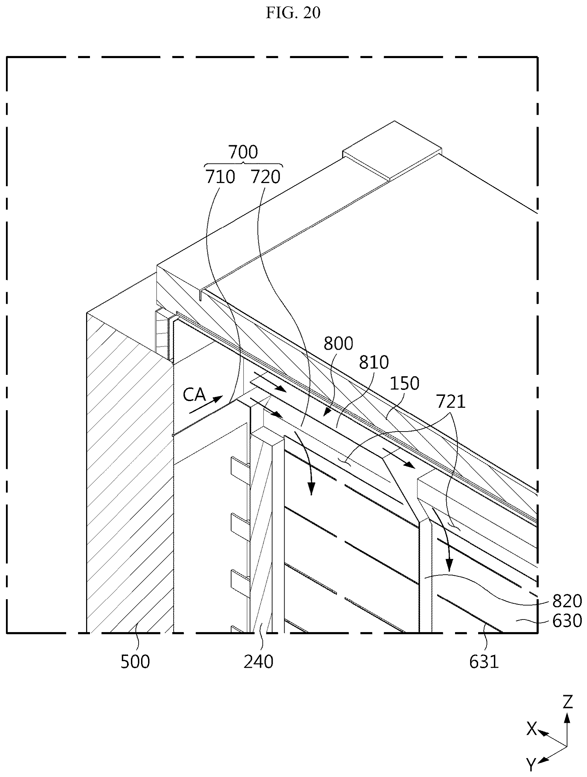

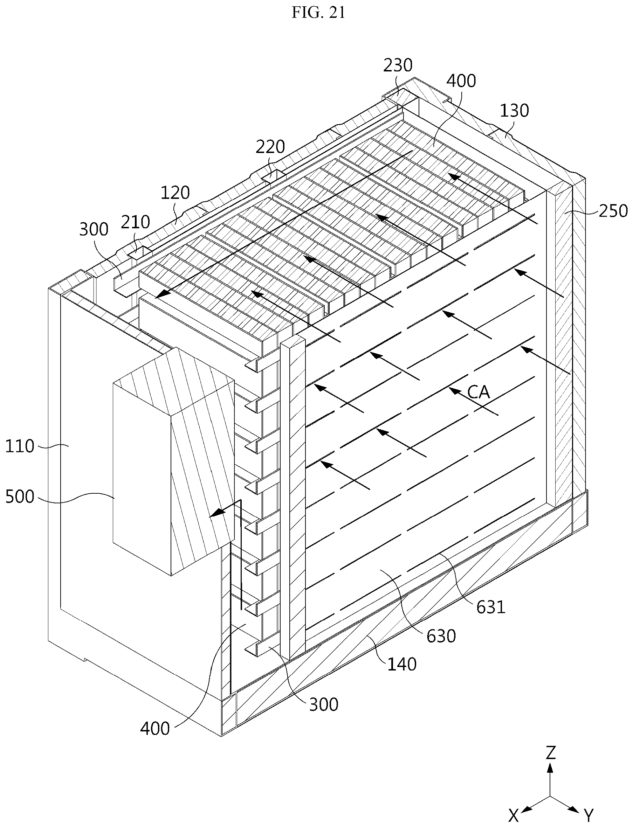

FIG. 17 is an enlarged view of part G in FIG. 11. FIG. 18 is a cross-sectional view illustrating the configuration taken along line H - H' in FIG. 1. FIG. 19 is an enlarged view of FIG. 18. FIG. 20 is a cross-sectional view illustrating the configuration taken along line H - H' in FIG. 1 when viewed from a different direction. FIG. 21 is a cross-sectional view illustrating the configuration taken along line I - I' in FIG. 18.

Referring to FIGS. 17 to 21, a duct 700 of a container module according to an embodiment of the present disclosure may include a front part 710 and a rear part 720. The front part 710 may communicate with the cooling unit 500. In addition, the front part 710 may guide the cooling air CA supplied from the cooling unit 500 upward or along the Z-axis direction. The front part 710 may guide the cooling air CA to be maintained higher than the first battery array 401 or the second battery array 402. The front part 710 may extend in the front-back direction or the X-axis direction.

The rear part 720 may extend from the front part 710. The rear part 720 may extend in the front-back direction or the -X-axis direction from the front part 710. The rear part 720 may guide the cooling air CA in the front-back direction or the -X-axis direction.

According to this configuration of the present disclosure, the cooling efficiency of the container module may be improved. The cooling air CA may be maintained higher than the first battery array 401 or the second battery array 402 along the duct 700. Therefore, the cooling air CA may be supplied to the uppermost battery pack 400 of the first battery array 401 or the second battery array 402.

Referring to FIGS. 17 to 21, the duct 700 of the container module according to an embodiment of the present disclosure may include an outlet 721 positioned higher than at least one of the first battery array 401 and the second battery array 402.

According to this configuration of the present disclosure, the cooling efficiency of the container module may be improved. Since the outlet 721 of the duct 700 is positioned higher than the first battery array 401 or the second battery array 402, the cooling air CA may be supplied to the uppermost battery pack 400 of the first battery array 401 or the second battery array 402.

Referring to FIGS. 17 to 21, the duct 700 of the container module according to an embodiment of the present disclosure may include an outlet 721 that extends along the space between the first battery array 401 and the second battery array 402. The outlet 721 may extend along the front-back direction or the X-axis direction.

According to this configuration of the present disclosure, the cooling differences depending on the positions of the battery cell 410 may be reduced. In addition, the flow of the cooling air CA may be evenly distributed. By forming the outlet 721 long, the cooling air CA may be appropriately supplied to the battery cell 410 located on the front side and the battery cell 410 located on the rear side.

Referring to FIGS. 17 to 21, the container module according to an embodiment of the present disclosure may further include a flow guide 800. At least a portion of the flow guide 800 may be located inside the duct 700. The portion of the flow guide 800 located inside the duct 700 may extend to the rear or in the +X-axis direction. The flow guide 800 may distribute the cooling air CA in the forward and backward directions, respectively.

According to this configuration of the present disclosure, cooling differences depending on the positions of the battery cells 410 may be reduced. The cooling air CA supplied from the cooling unit 500 may have a momentum to move backward. Due to this, the cooling air CA may flow more toward the rear than toward the front. Since the flow guide 800 is positioned in the duct 700, the flow of the cooling air CA may be evenly distributed.

Referring to FIGS. 17 to 21, the container module according to an embodiment of the present disclosure may include a first part 810 and a second part 820. The first part 810 may be positioned inside the duct 700. The first part 810 may extend in the front-back direction or the X-axis direction. The second part 820 may extend from the first part 810. The second part 820 may extend to the outside of the duct 700. The second part 820 may pass through the outlet 721 of the duct 700.

According to this configuration of the present disclosure, cooling differences depending on the positions of the battery cells 410 may be reduced. The cooling air CA supplied from the cooling unit 500 may have a momentum to move rearward. As a result, the cooling air CA may flow more toward the rear than toward the front. The flow guide 800 may guide the cooling air CA to be evenly distributed toward the front and rear.

Referring to FIGS. 17 to 21, the second part 820 of the flow guide 800 of the container module according to an embodiment of the present disclosure may extend in the up-down direction or the Z-axis direction. The second part 820 may be located between a pair of inner covers 630. In addition, the second part 820 may be in contact with a pair of inner covers 630.

According to this configuration of the present disclosure, cooling differences depending on the positions of the battery cells 410 may be reduced. The cooling air CA supplied from the cooling unit 500 may have a momentum to move backward. The flow guide 800 including the second part 820 may guide the momentum of the cooling air CA downward.

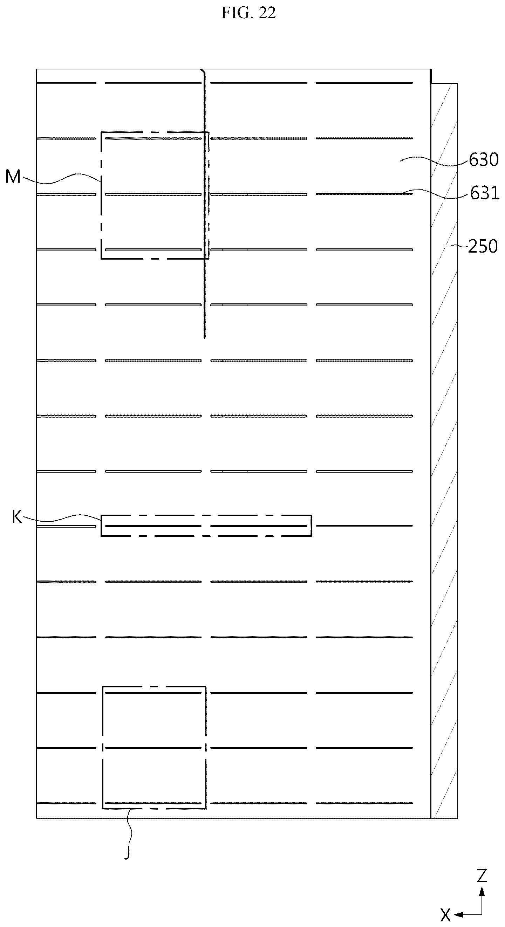

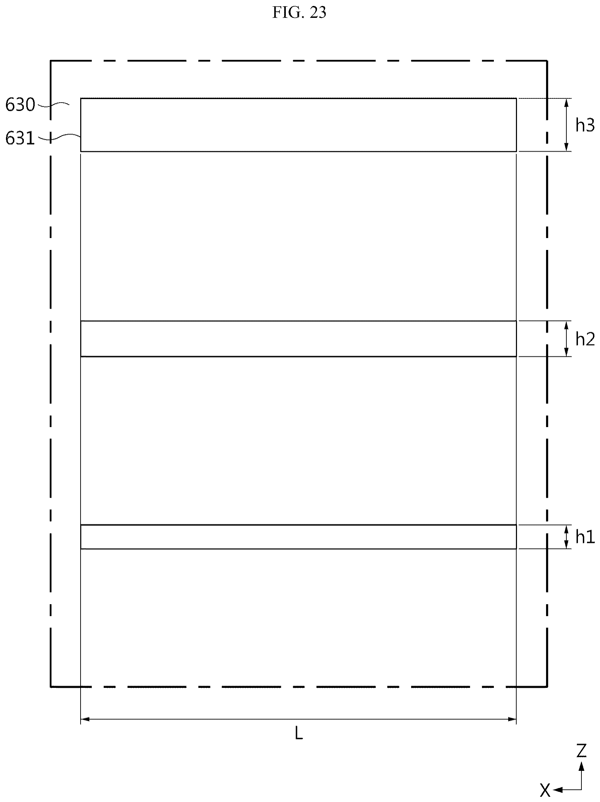

FIG. 22 is a partially cross-sectional view schematically illustrating the configuration taken along line H - H' in FIG. 1. FIG. 23 is an enlarged view of part J in FIG. 22.

Referring to FIG. 22 and FIG. 23, the inner cover 630 may include a plurality of supply holes 631. The plurality of supply holes 631 may be arranged at regular intervals along the front-back direction or the X-axis direction. In addition, the plurality of supply holes 631 may be arranged at regular intervals along the up-down direction or the Z-axis direction.

The inner cover 630 may include a part where the diameter of the supply hole 631 decreases in the downward direction or in the -Z-axis direction. Part J indicates that the diameter of the supply hole 631 decreases in the downward direction or in the -Z-axis direction. Three supply holes 631 may be configured to have the same length L in the front-back direction. In addition, the heights h1, h2, and h3 of the three supply holes 631 may be configured differently. The height h3 may be configured to be greater than the height h2, and the height h2 may be configured to be greater than the height h1.

The cooling air CA may have a momentum to move downward by the flow guide 800. Accordingly, the amount of cooling air CA supplied to the lower supply hole 631 may increase. The inner cover 630 including the part J may evenly distribute the flow rate of the cooling air CA supplied to the battery pack 400.

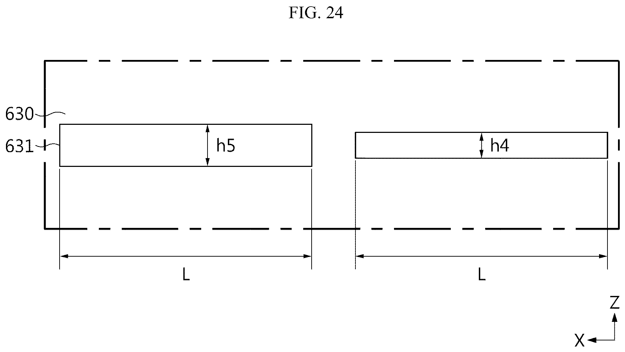

FIG. 24 is an enlarged view of part K in FIG. 22. Referring to FIGS. 22 and 24, the inner cover 630 may include a part in which the diameter of the supply hole 631 is reduced in the backward direction or in the -X axis direction. Part K indicates that the diameter of the supply hole 631 is reduced in the backward direction or -X-axis direction. Two supply holes 631 may be configured to have the same length L in the front-back direction. In addition, the height h5 may be configured to be greater than the height h4.

There may be a part where the distribution of the flow rate is not uniform due to the flow of cooling air CA. The inner cover 630 including the part K may evenly distribute the flow rate of the cooling air CA supplied to the battery pack 400.

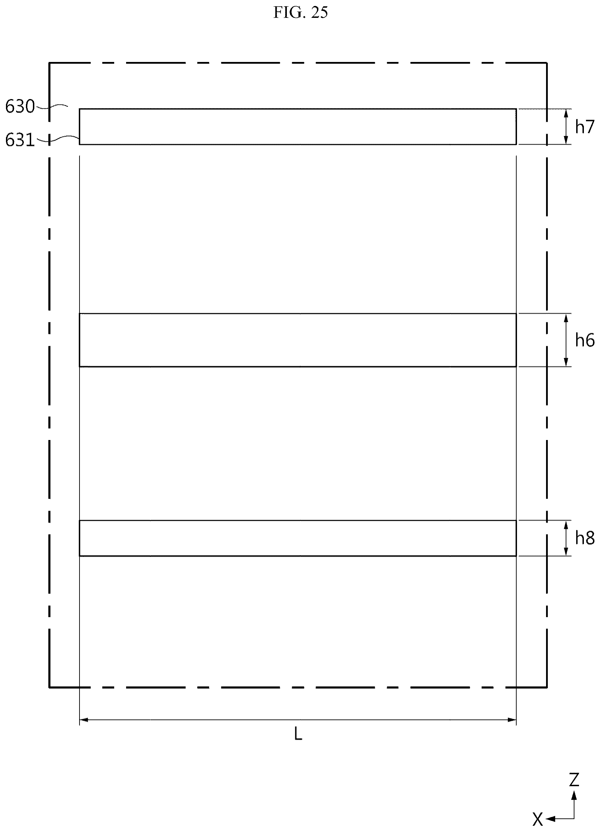

FIG. 25 is an enlarged view of the M part in FIG. 22. Referring to FIGS. 22 and 25, the inner cover 630 may include a part where the diameter of the supply hole 631 is increased and then reduced in the downward direction or -Z-axis direction. Part M indicates that the diameter of the supply hole 631 is increased and then reduced in the downward direction or -Z-axis direction. Three supply holes 631 may be configured to have the same length L in the front-back direction. In addition, the heights h6, h7, and h8 of the three supply holes 631 may be configured differently. The height h6 may be configured to be greater than the height h7, and the height h6 may be configured to be greater than the height h8.

There may be a part where the distribution of the flow rate is not uniform due to the flow of cooling air CA. The inner cover 630 including the part M may evenly distribute the flow rate of the cooling air CA supplied to the battery pack 400.

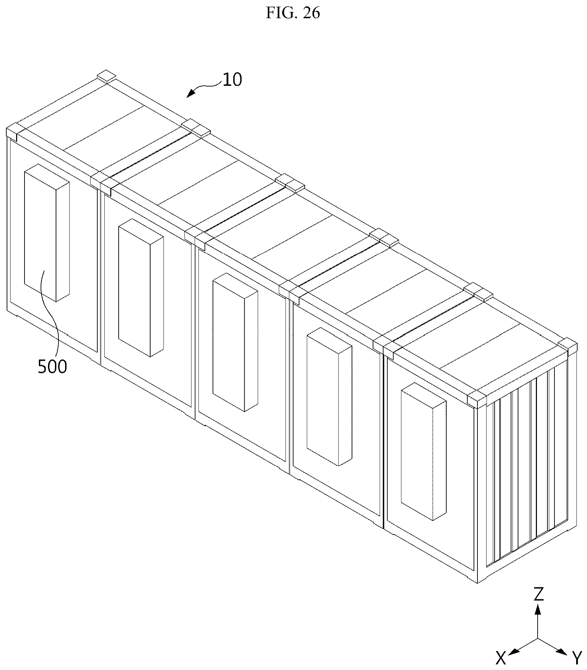

FIG. 26 is a drawing illustrating a container according to an embodiment of the present disclosure. Referring to FIG. 26, the container system may include a plurality of container modules 10. The plurality of container modules 10 may be physically or electrically connected.

The case 100 may be configured to be stacked on or combined with a case 100 of another container module 10. In addition, the container system may further include a control module. The control module may be fastened, coupled, connected, stacked, or fixed to the side panel 120 of the container module 10.

The control module may be electrically connected to a plurality of container modules 10 included in the container system. The control module may control charging and discharging of the plurality of container modules 10. In addition, the control module may obtain status information of the plurality of container modules 10.

In addition, the container system may be configured to further include a firefighting module for controlling a thermal event.

An energy storage system (ESS) according to the present disclosure may include the container module 10 according to the present disclosure. The energy storage system may include a plurality of container systems. In addition, the container system may include a plurality of container modules 10. Such an energy storage system may configure a link group by combining a predetermined number of container modules 10 and a control module 20.

Meanwhile, although terms indicating directions such as up, down, left, right, front, and back are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

## Claims

1. A container module comprising:
a case configured to provide an inner space;
a first battery array positioned inside the case and comprising a plurality of battery packs stacked in an up-down direction;
a second battery array positioned inside the case so as to be spaced apart from the first battery array in a left-right direction and comprising a plurality of battery packs stacked in the up-down direction;
a cooling unit configured to provide cooling air into the case; and
a duct positioned inside the case and configured to communicate the first battery array and the second battery array with the cooling unit.

2. The container module according to claim 1,
wherein the case comprises a front panel facing the first battery array and the second battery array, and
wherein the cooling unit is installed on the front panel.

3. The container module according to claim 1,
wherein the duct comprises an outlet positioned higher than at least one of the first battery array and the second battery array.

4. The container module according to claim 1,
wherein the duct comprises:
a front part communicating with the cooling unit and configured to guide the cooling air upward; and
a rear part extending from the front part in a front-back direction and configured to guide the cooling air in the front-back direction.

5. The container module according to claim 1,
wherein the duct comprises
an outlet extending between the first battery array and the second battery array.

6. The container module according to claim 1,
further comprising a flow guide positioned inside the duct and configured to distribute the cooling air in a front-back direction.

7. The container module according to claim 6,
wherein the flow guide comprises:
a first part positioned inside the duct; and
a second part connected to the first part and extending outside the duct.

8. The container module according to claim 7,
wherein the second part is positioned between the first battery array and the second battery array and extends downward.

9. The container module according to claim 1,
wherein the case comprises a side panel,
the container module further comprising a side cover positioned between the side panel and the second battery array, and configured to cover one side of the second battery array.

10. The container module according to claim 1,
wherein the case comprises a rear panel,
the container module further comprising a rear cover positioned between the rear panel and the second battery array, and configured to cover a rear of the second battery array.

11. The container module according to claim 10,
wherein the rear cover extends to cover between the first battery array and the second battery array and to cover a rear of the first battery array.

12. The container module according to claim 1,
further comprising an inner cover positioned between the first battery array and the second battery array, configured to cover an inner side of the second battery array, and having a supply hole.

13. A container system comprising a container module according to any one of claims 1 to 12.

14. An energy storage system comprising a container module according to any one of claims 1 to 12
